(19) Europäisches Patentamt / European Patent Office / Office européen des brevets

(11) **EP 4 044 424 B1**

(12) **EUROPEAN PATENT SPECIFICATION**

(45) Date of publication and mention of the grant of the patent:
**01.04.2026 Bulletin 2026/14**

(21) Application number: **21156958.7**

(22) Date of filing: **12.02.2021**

(51) International Patent Classification (IPC):
**H02P 23/00** $^{(2016.01)}$    **G05B 11/42** $^{(2006.01)}$

(52) Cooperative Patent Classification (CPC):
**H02P 23/0004; G05B 11/42**

(54) **SINGLE EVENT UPSET CONTROL STRUCTURES FOR PARALLEL MOTOR DRIVE CONTROL ARCHITECTURES**

STRUKTUREN ZUR STEUERUNG VON EINZELEREIGNISVERZERRUNGEN FÜR PARALLEL ANTRIEBSSTEUERUNGSARCHITEKTUREN VON MOTOREN

STRUCTURES DE CONTRÔLE DE PERTURBATION POUR DES ARCHITECTURES PARALLÈLES D'ENTRAÎNEMENT PAR MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.08.2022 Bulletin 2022/33**

(73) Proprietors:
• **Collins Aerospace Ireland, Limited**
  **T23 XN53 Cork City (IE)**
• **Goodrich Actuation Systems Limited**
  **Solihull, West Midlands B90 4SS (GB)**
• **Goodrich Control Systems**
  **Solihull, West Midlands B90 4SS (GB)**

(72) Inventors:
• **HOGAN, Diarmaid**
  **Cork, T12 R6P4 (IE)**
• **FERNANDEZ-MATTOS, Rodrigo**
  **Solihull, West Midlands B90 4JJ (GB)**
• **VALDIVA GUERRERO, Virgilio**
  **04720 Roquetas de Mar (ES)**
• **DINU, Andrei**
  **Leicester, Leicestershire LE3 3TJ (GB)**

(74) Representative: **Dehns**
  **10 Old Bailey**
  **London EC4M 7NG (GB)**

(56) References cited:
**EP-A1- 3 276 816**

• **CHUNWEI SONG ET AL: "Using fuzzy control for parallel-inverter system with nonlinear-load", ELECTRICAL MACHINES AND SYSTEMS (ICEMS), 2010 INTERNATIONAL CONFERENCE ON, IEEE, PISCATAWAY, NJ, USA, 10 October 2010 (2010-10-10), pages 193 - 197, XP031832289, ISBN: 978-1-4244-7720-3**
• **WEI YONGQING ET AL: "Control of parallel inverters based on CAN bus in large-capacity motor drives", ELECTRIC UTILITY DEREGULATION AND RESTRUCTURING AND POWER TECHNOLOGIES, 2008. DRPT 2008. THIRD INTERNATIONAL CONFERENCE ON, IEEE, PISCATAWAY, NJ, USA, 6 April 2008 (2008-04-06), pages 1375 - 1379, XP031254068, ISBN: 978-7-900714-13-8**

**Description**

TECHNICAL FIELD

The present disclosure is concerned with power drive systems for controlling one or more loads, and in particular with parallel motor drive systems and how to control such systems to handle single event upset.

BACKGROUND

Many applications require electronic control architectures to control several loads. Typically such architectures include motor drives comprising power converters to convert an input from a power supply (AC or DC) to an output of a different voltage appropriate to the load to be driven. Traditionally, each load would have its own dedicated power supply and its own dedicated motor drive, since the different loads may have different power and control requirements. In other systems, the motor loads may be supplied from a common power supply, but each still has its own dedicated motor drive. The development of power converters for respective loads is a significant part of the non-recurring cost incurred in developing new systems.

In some fields, there is a desire or a trend to reduce the number of system components in order to e.g. reduce weight or size, complexity and/or cost.

In aircraft, there is currently a trend towards so-called More Electric Aircraft (MEA) whereby loads such as flight control surfaces, landing gear, actuators, fans, pumps etc. which have traditionally be controlled by hydraulic and mechanical systems are now being designed to be controlled electrically by means of an electric motor. Steps are also being made towards All Electric Aircraft, where all loads, including the propulsion systems, will be controlled by electric motors. Whilst there are clear and significant advantages to electrical control of aircraft systems, and electrical control of systems in other fields, in terms of weight, size, reliability, environmental factors, cost and maintenance, further improvements can be made.

Recently, it has been considered whether control architectures might be designed that allow multiple potential loads to be driven using standard motor drives. Multiplexed motor drive systems have been designed for use in e.g. MEA. In such systems, multiple motor drives are interfaced to electrical loads via a switching matrix that reconfigures the connections between motor drives and loads/motors. Such systems are useful in applications where the loads are not all used simultaneously and so the motors can be allocated amongst the loads as they need to be powered. In an aircraft, for example, an electrical thrust reverser actuator and a landing gear electrical retraction actuator are not required to operate at the same time and so can be powered by the same motor drive at different times. Such a design has a greatly reduced size and weight and associated cost and complexity.

Along similar lines, switching matrices can be used to parallel-connect multiple drives to power large loads. This avoids the need to have large drives always available for such large loads. Ideally, the weight of the inductive components used in interfacing the parallel drives should be minimised; the drives should be scalable and modular so that they can easily be switched between parallel operation and stand-alone operation; the designs should enable fast current control loop dynamics and the need for high bandwidth communications should be minimised.

Chunwei Song et al., entitled "Using fuzzy control for parallel-inverter system with nonlinear-load" (XP031832289, ISBN: 978-1-4244-7720-3), discloses features of the preamble of claim 1.

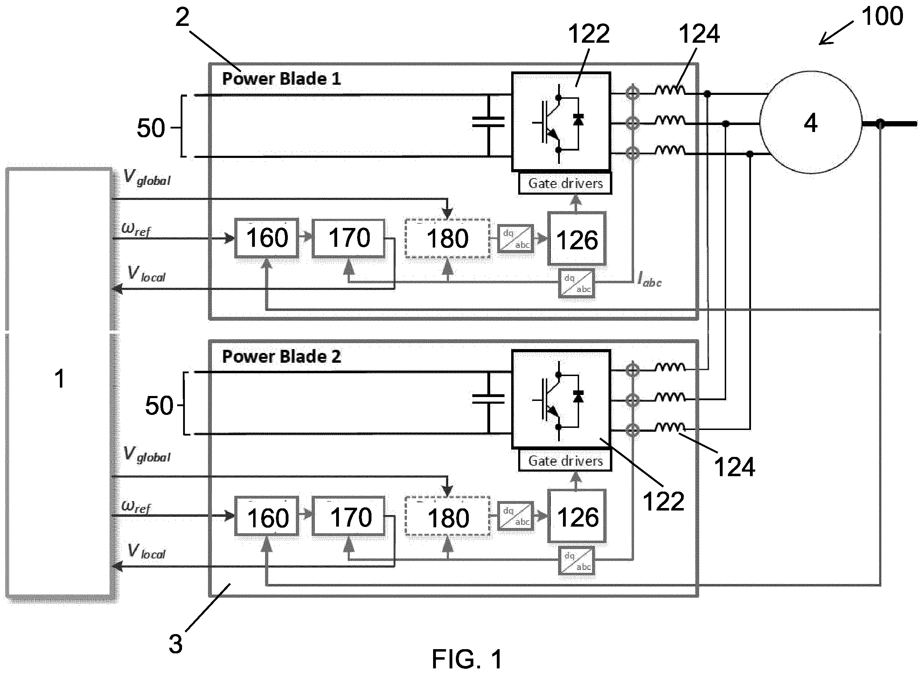

An example of an architecture that enables switching between parallel and stand-alone operation is shown in Fig. 1 described further below.

In motor drive systems, 'Single Event Upset' can be considered as a random event whereby a single bit in the system controller (CPU, FPGA, DSP, etc.) can be flipped, or 'upset', as a consequence of cosmic radiation. In the case of this occurring within the motor drive controller structure, it is possible that a Single Event Upset could result in the sudden saturation of a controller integrator. For parallel motor drive systems, such an occurrence would be problematic since the sudden saturation within one controller of one drive in a parallel configuration may result in a current transient which could de-stabilise the system behaviour. To achieve seamless response and ensure current balance across the motor drives, the integrators in the drives should also be reset or initialised after every computational step to ensure that all motor drives are working from the same initial conditions.

There is, therefore, a need to provide a simple, effective and reliable single event ride through capability for a motor drive control system having parallel-connected motor drives.

SUMMARY

According to one aspect, there is provided a proportional integrator for control of a motor drive as claimed in claim 1.

The PI may be incorporated into a current control loop or a speed control loop, whereby the input command signal is a current/speed reference signal and the local measured signal is a local current/speed signal, and wherein the global input signal is a global voltage reference based on a local voltage reference from the motor drive and all motor drives connected in parallel with the motor drive, in use. The global reference may be based on e.g. a sum or average of local reference signals.

BRIEF DESCRIPTION OF THE DRAWINGS

Some examples of implanting the ideas of this disclosure will now be described, by way of example only, with reference to the drawings.

Fig. 1 shows an example of a parallel motor drive architecture into which the PI according to the disclosure could be incorporated.

Figure 2 is a schematic view of a conventional motor control scheme.

Figure 3 shows a conventional PI control.

Figure 4 shows an example of a current control proportional integrator adapted for integrator initialisation according to the disclosure.

Figure 5 shows an example of a current control proportional integrator in more detail adapted for integrator initialisation in a two-drive system according to the disclosure.

Figure 6 shows an alternative proportional integrator modification for a speed control loop.

DETAILED DESCRIPTION

The present disclosure is concerned with control of motor drives to address issues that can arise particularly when operating in parallel to drive a common load.

Figure 1 shows an example of such a parallel drive architecture.

In the example shown, the system 100 includes a central controller 1 that interfaces two motor drives, or power blades 2,3, in parallel, to drive a single motor 4.

Each motor drive 2, 3 may include an inverter 122 and output inductors 124. The motor drives 2, 3 may each receive DC power via input terminals 50 (e.g., from a common power supply). This may then be converted by the inverter 122 into an output voltage (e.g., a three-phase AC voltage) for actuating a load via inductors 124. Two motor drives 2, 3 are shown in Fig. 1, but more could be provided as required, and as discussed herein.

It will be appreciated that references to motor drives in accordance with various embodiments could refer to any type of power converter, and the broadest aspects of the present disclosure are not intended to be limited to using motor drives, or providing a load in the form of a motor.

The plurality of motor drives 2, 3, whilst each having their own local controller, typically need some sort of common or centralised operation (e.g., control system) for example to synchronise their operation. Accordingly, the motor drives 2, 3 may be controlled centrally using a central controller 1 (e.g., processor or circuitry) or global communication module. The central controller 1 may be configured to control, for example, which motor drive(s) 2, 3 are to be used (e.g., selected as discussed above) at a particular time. The central controller 1 may achieve this by switching between the motor drives (e.g., the power inverters thereof) using, e.g., a modulation scheme or technique.

Generally, this technology combines the use of local current controllers (e.g., current control loops) of each motor drive, and a central or global controller (e.g., the central controller 1 in Fig. 1). The local current controllers are configured to receive current values associated with each output voltage phase of the inverter 122 (e.g., measured at an output of each inverter 122 and optionally presented in a synchronous reference frame or "d-q system"), which correspond to a local current measurement $i_{local}$ for each of the motor drives 2, 3 to be transmitted to the central controller 1.

Each motor drive 2, 3 may include components or circuitry that form a speed loop 160 having as an input a reference speed $\omega_{ref}$ and also a motor speed $\omega_m$ (which may be measured or calculated). The reference speed $\omega_{ref}$ would typically be given to all power converters operating in parallel, and could be set by the central controller 1 or elsewhere (e.g., a flight control computer, or other component or module, e.g., having another control loop). For example, a flight controller may be commanding that a component moves by actuating to a certain position at a given speed. The speed loop 160 is configured to generate a suitable reference (e.g., current reference), which is then input into a current loop 170 (described below) to regulate the output current of the motor drive, in effect regulating the speed of rotation of the motor.

Although speed loops such as this are known in the art, the technology disclosed herein means this control can be retained while integrating a parallel system. A speed loop 160 is not essential, however, for example in cases where the load is not a motor, or the rotational speed of the motor does not otherwise require regulation.

Each motor drive 2, 3 comprises a local current control loop 170 that is configured to regulate the output current of the respective motor drive 2, 3, so as to ensure the motor drives 2, 3 operating in parallel work together adequately and effectively.

The central controller 1 is configured to determine or calculate a global voltage reference $V_{global}$ based on the local voltage reference $Vl_{localN}$ generated via the current controllers for each of the parallel motor drives 2, 3. The global voltage reference $V_{global}$ may be an average or sum of the local voltage references $V_{localN}$. The global voltage reference $V_{global}$ is then transmitted back to each local motor drive 2, 3.

As shown in Fig. 1, there may be a conventional speed controller (speed loop 160) implemented on each local motor drive 2, 3, where the speed controller is configured to generate a current reference, which the current loop 170 acts upon to regulate the output current of the motor drive 2, 3, in effect regulating the speed of rotation of the motor. The speed reference $\omega_{ref}$ is specified from the central controller 1 or central communication element, and is the same for all motor drives 2, 3 operating in parallel.

An optional balancing network 180 may be used within each motor drive 2, 3 that can form a supplementary element of the local control scheme. The balancing network 180 may be configured to adjust the voltage reference further, based on the local output currents of the respective inverter 122. This can help to alleviate differences in output currents between the motor drives 2, 3.

Any suitable method or type of modulation may be employed in the present disclosure. In particular, the modulation may comprise pulse width modulation ("PWM") such as space vector modulation ("SVM"). Each motor drive 2, 3 may include a modulation module 126 configured to control the synchronisation of the motor drive 120, for example the synchronisation of a switching frequency of the modulation, e.g., using PWM or SVM.

The modulation (e.g., PWM or SVM) module 126 is configured to generate the appropriate signals (e.g., logic and/or switching signals) for the inverter 122 of the motor drive 2, 3 (e.g., gate drivers thereof) to provide a controlled commutation of the output voltages thereof, whilst regulating the output voltages/currents of each inverter 122 to maintain consistency between the motor drives 2, 3. Thus, the modulation module 126 may be configured to send suitable such signals to the inverter 122 that control the timings associated with the respective motor drive 2, 3 (e.g., the output voltages thereof) in use. Generation of the switching signals for the inverters 122 by each respective modulation (e.g., SVM) module 126 is facilitated by the use of the global voltage measurement $V_{global}$ and current reference.

Each motor drive 2, 3 may be a single power converter and the circuitry/components thereof may be located on a single circuit board (e.g., a single printed circuit board or "PCB"). The circuit boards (or "blades") holding the motor drives 2, 3 could be similar (or substantially identical), such that they comprise the same interface for communicating with the central controller 1. In this manner, the motor drives 2, 3 could be easily scaled (e.g., from using two motor drives 2, 3 to using three or more) without any modification of the motor drives 2, 3 or central controller 1.

The current values of the three phases (i.e., the instantaneous inverter 122 output currents) may be measured and/or determined for use in the circuitry of the motor drive 2, 3 and (optionally) as part of the balancing network 180. Suitable components or circuitry may be configured to determine the output currents. The output currents (e.g., phase currents) could be measured and/or determined using a current sensor, although any suitable technique could be used, with optionally a current sensor provided for each of the three phases.

The distributed system 100 may use synchronous reference frame control, which is known in the art (also called "d-q control"). Using such a control mechanism, the voltage and current can be converted into a reference frame that rotates synchronously with a voltage vector (e.g., by Park Transformation) so that three-phase time-varying signals are transformed into DC signals. Using "d-q currents" provides a convenient way of representing the output current of the motor drive, and analysing the system.

As mentioned above, a problem with such parallel drive systems is that a single event upset can result in the sudden saturation of the integrators of one of the controllers, can propagate through all of the parallel drives leading to an overall lack of control by the system.

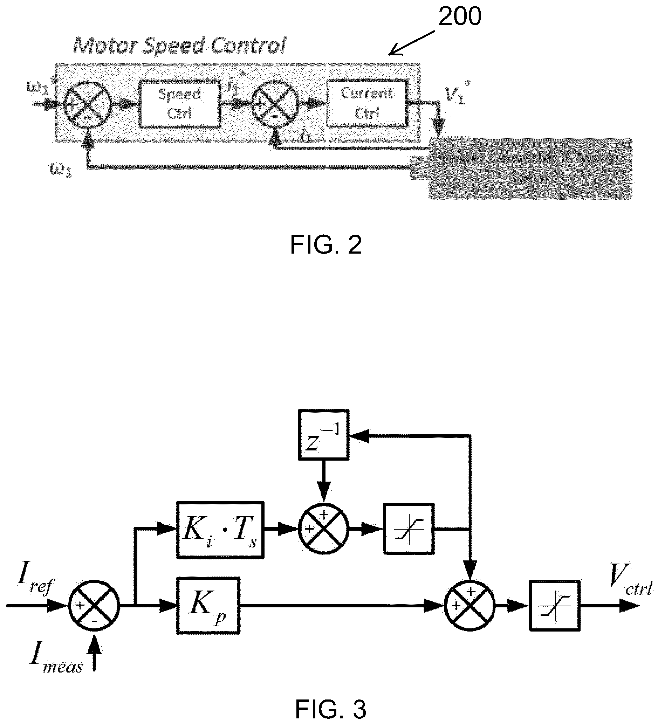

Fig. 2 shows a simplified motor drive control scheme to explain the problems with having parallel motor drives controlled by a single central controller 1. The motor control unit 200 receives a motor speed input $\omega_1$ and outputs a motor control voltage $V_1^*$ to the power converter and motor drive. The motor control unit 200 has an inner current feedback control loop containing a current control circuit and an outer speed control loop containing a speed control circuit. Figure 3 shows a conventional proportional integral controller for the current control loop for regulating motor current as is known.

Referring back to Fig. 1, in a parallel architecture, each motor drive will have a structure such as shown in Fig. 2, with the current loop 170 designed as a proportional integrator as shown in Fig. 3. The input to the speed loop $\omega_1^*$ in Fig. 2, will be $\omega_{ref}$ from the central controller. The speed loop will provide a reference current $i_{ref}$ to the current loop 170 (Fig. 1) which will be compared and integrated using the local measured current $i_{meas1}$, to output a local control voltage $V_{local}$. This is provided to the central controller 1. The central controller combines $V_{local}$ from each of the parallel drives to provide the global voltage $V_{global}$.

Such structures will not be described in further detail. Each motor drive will have different local component and sensor tolerances, and so each motor drive will supply a different output. Neither local controller will be able to regulate their output current to the correct value, as there will be circulating current flowing between the parallel motor drives due to these component and sensor tolerance issues. Without compensation, this will result in integrator wind up and saturation.

For a parallel drive system to function correctly, therefore, it has been found necessary to integrate local controls which can handle single event upset and can ensure global functionality to prevent issues due to a single event upset under normal, parallel, operating conditions.

The present disclosure provides a control scheme whereby a 'global integrator signal' can be derived, based on local signals and on the global voltage command, for initialisation of the integrators.

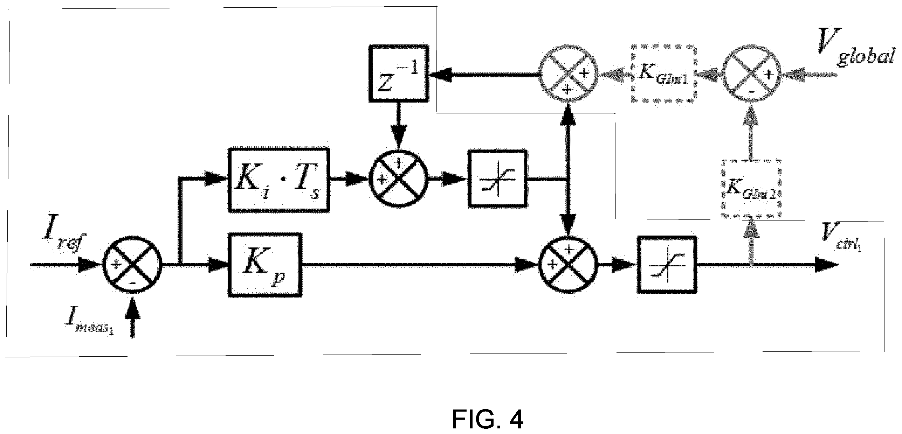

The integrator of the current loop is therefore modified based on the global voltage. Referring to Figure 4, an example of the control scheme according to this disclosure will now be described.

The example shown in fig. 4 is for two motor drives (inverters) operating in parallel. The system can, however, be adapted for more than two parallel drives, as will be further described below. In the example shown, and as will be described further, the scheme generates an integer global average term along with an error term associated with the local control error.

The control scheme is arranged to cause initialisation of the current control proportional integrator based on a combination of the local controller output and the feedback from the global reference.

The principle of the modification provided according to this disclosure will now be described in more detail, first with reference to Fig. 4. The portion of Fig. 4 in dotted lines is essentially the same as the conventional proportional integrator shown in Fig. 3. As is conventional for current control, the PI scheme compares the current demand, i.e. the reference current for the first drive 2 (derived, in this example, from the reference speed $\omega_{ref}$ input from the central controller) with the local current measured in the first drive 2 and performs a proportional integral function to provide a local control voltage $V_{ctrl1}$ for the first drive. In addition, however, the local voltage demand of the first motor drive 2 is summed with a modified signal S which takes into account the local voltage demand of the second motor drive 3 (and other motor drives if more than two are connected).

In more detail, for each drive, the global voltage $V_{global}$ from the central controller 1, is provided as an input to the local current loop proportional integrator. As mentioned above, the global voltage $V_{global}$ is a sum or an average of all of the local current controller reference voltages in the system e.g. $V_{global} = V_{local\,1} + V_{local2}.....+ V_{localN}$ where N is the number of parallel drives in the system. Thus, the global reference $V_{global}$ contains information about the behaviour of each drive in the system. By appropriate scaling of the signals using appropriate gains K, $V_{global}$ can be used to compare against the behaviour of the local drive, from $V_{ctrl}$, to inject a modification signal S into the local proportional integrator, which contains some information as to the behaviour of the other drives in the system.

If, for example, the system includes two parallel drives, then $V_{global} = V_{ctrl1} + V_{ctrl2}$. The gain $K_{GInt2}$ will be selected, in this case, as 2, and $K_{Int1}$ will be selected as ½. The modification signal S, injected into the local proportional integrator, will, in that case, be equal to $(V_{global} - (2*V_{ctrl1}))*1/2$. As $V_{global}$, for two drives, $= V_{ctrl1} + V_{ctrl2}$, then the injected signal S is $1/2V_{ctrl2}$, i.e. is based on the output of the other drive.

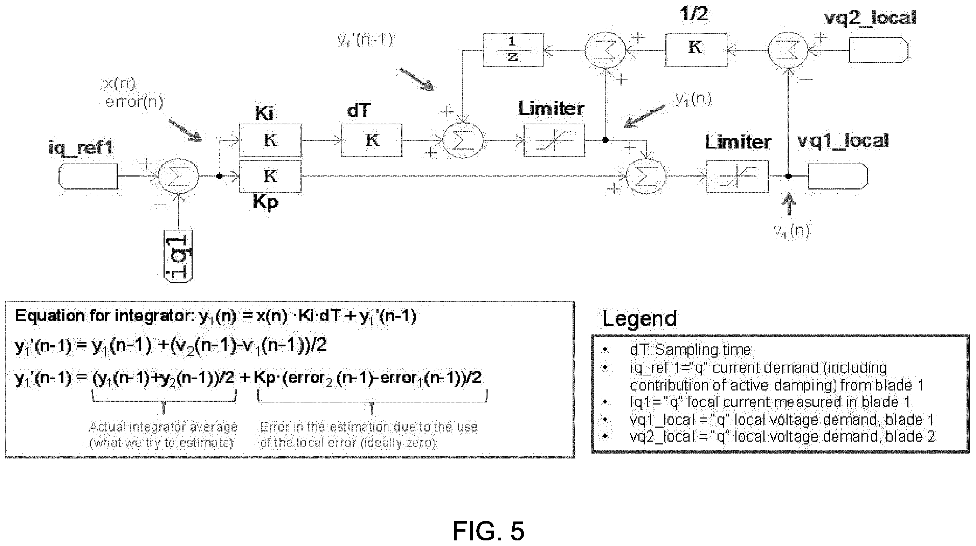

This can be seen in more detail, for the two drive system, in Fig. 5. Here, it can be seen that since $V_{q2-local}$ contains information from the second drive, and as this is provided as an input to the local integrator for the first drive, the local integrator becomes, essentially, an average of the two local drives (including a small error term), so including some of the behaviour of the second drive into the first drive. This allows the system to balance itself.

The equation for the integrator is:

$$y_1(n) = x(n).Ki.dT + y_1{}'(n-1)$$

and

$$y_1{}'(n-1) = y_1(n-1) + (v_2(n-1) - v_1(n-1))/2$$

and

$$y_1{}'(n-1) = y_1(n-1) + y_2(n-1))/2 + Kp.(error_2\,(n-1) - error_1(n-1))/2$$

where:

$y_1(n-1) + y_2(n-1))/2$ is the actual integrator average which is to be estimated, and
$Kp.(error_2\,(n-1) - error_1(n-1))/2$ is the error in the estimation due to the use of the local error which, in an ideal case, is zero.

Fig. 5 shows the integrator of fig 4 in the context of a parallel motor drive control architecture with two parallel motor drives, but more than two motor drives may also be connected in parallel, as required, with the gains tuned accordingly.

Test have confirmed that the modified integrator control structure of this disclosure allows the system to maintain operation in the event of sudden integrator saturation in one of the current controls.

The modification to the PI can easily be bypassed/deactivated if the motor drive is to be used as a standalone drive rather than in a parallel assembly.

Whilst the modification of the integrator has been described in relation to the current loop, the same principle can be applied to the proportional integrator of the speed loop, whereby local current setpoints of other drives are used to inject a modification signal to the integrator.

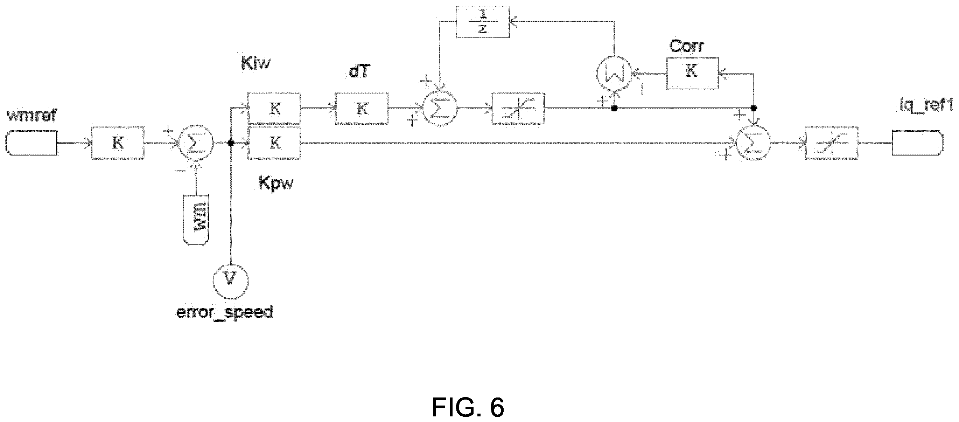

In another example, the speed loop may be modified in a simpler way, as shown in Fig. 6, to provide single event upset ride-through capabilities. Here a correction factor Corr is added to the proportional integrator of the speed loop that balances the integral term depending on the total current reference command. This is equivalent to limiting the steady-state gain of the proportional integral control of the speed loop. The correction factor Corr acts as a discharge term, slowly winding back each local integrator, allowing the system to maintain stability but performing more slowly. This simplified structure is possible because the speed loop does not need to react as quickly as the current loop to system transients caused by a single event upset and, therefore, it is not necessary to utilise a global feedback signal.

The present disclosure provides a simple modification to the conventional proportional integrator of the current and/or speed control loop which mitigates the impact of controller saturation resulting from parallel operation of motor drives. The approach can be easily switched in or out as required as motor drives transition from standalone operation to parallel operation.

## Claims

1. A proportional integrator for control of a motor drive (2) arranged to be connected in parallel with one or more other motor drives (3) to drive a common load (4), the proportional integrator comprising means to receive an input command signal and to compare with a local measured signal from the motor drive (2) and to output a local control signal for that motor drive (2), further comprising a global input signal indicative of the behaviour of the one or more other motor drives (3), the global input signal being incorporated into the proportional integral function with the input command signal and the local measured signal to provide the local control signal, **characterised in that** the proportional integrator further comprises tunable gains applying a gain (KGInt2) factor to the global input signal depending on local signals from which the global input signal is derived.

2. The proportional integrator of claim 1, wherein the input command signal is a current reference signal and the local measured signal is a measured current signal, and wherein the global input signal is a global voltage reference based on a local voltage reference from the motor drive (2) and all motor drives (3) connected in parallel with the motor drive (2), in use.

3. The proportional integrator of claim 2, incorporated in a current control loop for the motor drive (2).

4. The proportional integrator of claim 1, wherein the input command signal is a speed reference signal and the local measured signal is a local speed signal, and wherein the global input signal is a global q-axis current reference based on a local current reference from the motor drive (2) and all motor drives (3) connected in parallel with the motor drive (2), in use.

5. The proportional integrator of claim 4, incorporated in a speed control loop for the motor drive (2).

## Patentansprüche

1. Proportionalintegrator zum Steuern eines Motorantriebs (2), der angeordnet ist, um zu einem oder mehreren anderen Motorantrieben (3) parallelgeschaltet zu sein, um eine gemeinsame Last (4) anzutreiben, wobei der Proportionalintegrator Mittel zum Empfangen eines Eingangsbefehlssignals und zum Vergleichen mit einem lokalen Messsignal von dem Motorantrieb (2) und zum Ausgeben eines lokalen Steuersignals für diesen Motorantrieb (2) umfasst, ferner umfassend ein globales Eingangssignal, das das Verhalten des einen oder der mehreren anderen Motorantriebe (3) angibt, wobei das globale Eingangssignal mit dem Eingangsbefehlssignal und dem lokalen Messsignal in der Proportional-Integral-Funktion integriert ist, um das lokale Steuersignal bereitzustellen, **dadurch gekennzeichnet,**

**dass** der Proportionalintegrator ferner abstimmbare Verstärkungen umfasst, die einen Verstärkungsfaktor (KGInt2) auf das globale Eingangssignal anwenden, abhängig von lokalen Signalen, aus denen das globale Eingangssignal abgeleitet wird.

2. Proportionalintegrator nach Anspruch 1, wobei das Eingangsbefehlssignal ein Stromreferenzsignal ist und das lokale Messsignal ein gemessenes Stromsignal ist und wobei das globale Eingangssignal eine globale Spannungsreferenz ist, die auf einer lokalen Spannungsreferenz von dem Motorantrieb (2) und allen Motorantrieben (3), die zu dem Motorantrieb (2) parallelgeschaltet sind, im Betrieb basiert.

3. Proportionalintegrator nach Anspruch 2, der in eine Stromregelungsschleife für den Motorantrieb (2) integriert ist.

4. Proportionalintegrator nach Anspruch 1, wobei das Eingangsbefehlssignal ein Drehzahlreferenzsignal ist und das lokale Messsignal ein lokales Drehzahlsignal ist und wobei das globale Eingangssignal eine globale q-Achsen-Stromreferenz ist, die auf einer lokalen Stromreferenz von dem Motorantrieb (2) und allen Motorantrieben (3), die zu dem Motorantrieb (2) parallelgeschaltet sind, im Betrieb basiert.

5. Proportionalintegrator nach Anspruch 4, der in eine Drehzahlregelungsschleife für den Motorantrieb (2) integriert ist.

**Revendications**

1. Intégrateur proportionnel pour la commande d'un entraînement de moteur (2) agencé pour être connecté en parallèle avec un ou plusieurs autres entraînements de moteur (3) afin d'entraîner une charge commune (4), l'intégrateur proportionnel comprenant des moyens pour recevoir un signal de commande d'entrée et le comparer à un signal mesuré localement provenant de l'entraînement de moteur (2) et pour produire un signal de commande local pour cet entraînement de moteur (2), comprenant également un signal d'entrée global indicatif du comportement de l'un ou plusieurs entraînements de moteur (3), le signal d'entrée global étant incorporé dans la fonction proportionnelle intégrale avec le signal de commande d'entrée et le signal mesuré localement pour fournir le signal de commande local, **caractérisé en ce que** l'intégrateur proportionnel comprend également des gains réglables appliquant un facteur de gain (KGInt2) au signal d'entrée global en fonction des signaux locaux à partir desquels le signal d'entrée global est dérivé.

2. Intégrateur proportionnel selon la revendication 1, dans lequel le signal de commande d'entrée est un signal de référence de courant et le signal mesuré local est un signal de courant mesuré, et dans lequel le signal d'entrée global est une référence de tension globale basée sur une référence de tension locale provenant de l'entraînement du moteur (2) et de tous les entraînements de moteur (3) connectés en parallèle avec l'entraînement du moteur (2), en cours d'utilisation.

3. Intégrateur proportionnel de la revendication 2, incorporé dans une boucle de commande de courant pour l'entraînement du moteur (2).

4. Intégrateur proportionnel selon la revendication 1, dans lequel le signal de commande d'entrée est un signal de référence de vitesse et le signal mesuré local est un signal de vitesse, et dans lequel le signal d'entrée global est une référence de tension globale basée sur une référence de courant local provenant de l'entraînement du moteur (2) et de tous les entraînements de moteur (3) connectés en parallèle avec l'entraînement du moteur (2), en cours d'utilisation.

5. Intégrateur proportionnel de la revendication 4, incorporé dans une boucle de commande de vitesse pour l'entraînement du moteur (2).

FIG. 1

FIG. 2

FIG. 3

FIG. 4

**Equation for integrator:** $y_1(n) = x(n) \cdot Ki \cdot dT + y_1{}'(n-1)$

$y_1{}'(n-1) = y_1(n-1) + (v_2(n-1) - v_1(n-1))/2$

$y_1{}'(n-1) = \underbrace{(y_1(n-1) + y_2(n-1))/2}_{\substack{\text{Actual integrator average} \\ \text{(what we try to estimate)}}} + \underbrace{Kp \cdot (error_2(n-1) - error_1(n-1))/2}_{\substack{\text{Error in the estimation due to the use} \\ \text{of the local error (ideally zero)}}}$

**Legend**

- dT: Sampling time
- iq_ref 1="q" current demand (including contribution of active damping) from blade 1
- Iq1 = "q" local current measured in blade 1
- vq1_local = "q" local voltage demand, blade 1
- vq2_local = "q" local voltage demand, blade 2

**FIG. 5**

EP 4 044 424 B1

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHUNWEI SONG et al.** *Using fuzzy control for parallel-inverter system with nonlinear-load*, ISBN 978-1-4244-7720-3